**Europäisches Patentamt**

**European Patent Office**

**Office européen des brevets**

(19)

(11) Publication number : **0 496 626 A1**

## (12) EUROPEAN PATENT APPLICATION

(21) Application number : **92300599.5**

(22) Date of filing : **23.01.92**

(51) Int. Cl.$^5$ : **B65D 65/42, B65B 63/08**

(30) Priority : **25.01.91 US 646157**

(43) Date of publication of application :
**29.07.92 Bulletin 92/31**

(84) Designated Contracting States :
**DE FR GB IT**

(71) Applicant : **MINNESOTA MINING AND MANUFACTURING COMPANY**
**3M Center, P.O. Box 33427**
**St. Paul, Minnesota 55133-3427 (US)**

(72) Inventor : **Bankers, Gerald J., c/o Minnesota Mining and**
**Manufact. Co., 2501 Hudson Road, P.O. Box 33427**
**St. Paul, Minnesota 55133-3427 (US)**
Inventor : **Stobbie IV, Charles W. c/o Minnesota Mining and**
**Manufact. Co., 2501 Hudson Road, P.O. Box 33427**
**St. Paul, Minnesota 55133-3427 (US)**

(74) Representative : **Baillie, Iain Cameron et al**
**Ladas & Parry Altheimer Eck 2**
**W-8000 München 2 (DE)**

(54) **Package containing solid thermoplastic material.**

(57)    A container of solid thermoplastic material in which the thermoplastic material is separated from the container by a layer of an abherent material. A method of filling the container with the thermoplastic material and a method of removing the thermoplastic material from the container is also disclosed.

EP 0 496 626 A1

## Technical Field

This application relates to a package of a thermoplastic (i.e., hot-melt) material such as an adhesive, coating or sealant.

## Background Art

Thermoplastic materials, sometimes referred to herein as hot melt materials, must be heated to a temperature sufficient to render them molten before they can be used. It is necessary to employ specially made devices to remove them from large containers such as five gallon pails or drums. These devices typically comprise a heated platen which fits inside of the container of the solid, thermoplastic material, and heats the thermoplastic material and causes it to become molten and flowable. The molten material is then forced through an opening in the platen, pumped and dispensed to a desired location.

The heated platen includes an "O" ring which closely contacts the inside wall of the container in order to prevent leakage of molten material as the platen is pressed downwardly into the container. To insure a close fit and to prevent damage to the expensive "O" ring seal, care must be taken to position the container properly.

A number of approaches have been utilized in order to achieve proper positioning of the platen. Most frequently, this problem has been solved by providing a head space for positioning the platen in the pail. Other approaches have been to fill the pail completely and use either a pail extender to receive and position the platen or use a specially designed unloader. The use of any of these techniques with moisture curable materials is not totally satisfactory.

The use of head space in a container provides a free volume which can contain moisture. The moisture reacts with the surface of the moisture curing thermoplastic material, forming a skin of cured material which complicates the unloading of the uncured material from the pail.

One approach to overcome this problem in pails that utilize a head space, is to fill the container in an inert atmosphere, i.e, dry nitrogen. Once the container has been filled to the desired level, a moisture impermeable membrane can be placed over the molten material, and the cover sealed to the container. The membrane is added because many containers will not provide the hermetic seal necessary to prevent moisture contamination, and it is thought that the low moisture vapor transmission membrane will additionally protect the surface of the thermoplastic from curing. In order to be effective, the membrane must remain on top of the molten material and provide a good seal with the container walls. However, during handling of freshly filled containers, there is a strong likelihood that the still molten material will flow over the edges of the membrane, thereby exposing it to any moisture which my have been drawn into the container head space. This, of course, essentially obviates the purpose of the membrane. Furthermore, the use of a liner necessitates its removal from the container prior to use of the thermoplastic material. This adds additional handling and inconvenience, especially if curing has taken place on the edges of the membrane.

The approach of eliminating of the head space is also not totally satisfactory. For example, as the thermoplastic material cools and solidifies, a vacuum is created in the container. The degree of vacuum created is dependent upon the height of the head space, with shorter head spaces resulting in greater vacuum. In any event, the pressure differential between the interior of the container and the exterior puts stress on the cover gasket and increases the likelihood of some exterior air, together with any moisture in it being drawn into the head space. This moisture can cause the above-mentioned curing reaction with its attendant problems.

In addition to the potential problems caused by creating this high pressure differential, the lack of head space makes it necessary to employ either a pail extender or a specially designed unloader to remove the thermoplastic material.

In the former case, the extender is clamped on to the container to provide a ring-shaped extension to its top. One example of this type of equipment is disclosed in European Patent Application Publication No. 0 330 390 A1.

The use of extenders is, however not entirely satisfactory It requires additional handling and setup for the end user. It also makes the container more cumbersome and difficult to handle. Furthermore, the extender may leak at the junction between it and the pail. This wastes the material in the container and causes cleanup problems.

In the latter case, e.g., when a specially designed unloader is employed, it is necessary to utilize an expensive piece of equipment.

## Disclosure of the Invention

It has now been discovered that application of a thin (e.g., at least about 1 micron ($\mu$) thick) layer of an abherent material to the inner surfaces of the package or container separates the solidified thermoplastic material from the container and permits its easy removal from the container. The abherent material may be applied to the inner surfaces of the container by the packager just prior to the addition of the thermoplastic material. However, the abherent material may also be applied at the time that the container is manufactured.

In accordance with the present invention, a new concept in packaging thermoplastic materials is provided, which, in one embodiment, comprises a package of solid thermoplastic material; and in another embodiment, a method of packaging a thermoplastic material; and in yet another embodiment, a method of removing a solidified thermoplastic material from the package.

In first embodiment, the package comprises a container, a thin layer of an abherent material on the interior surfaces of the container, and a solidified mass of the thermoplastic material separated from the container by the abherent material. The package also includes a head space of a volume sufficient to receive a platen so that the material can be removed from the container.

As used herein, the following terms have the following meanings:

a) "abherent material" means a material which prevents the significant adhesion of one material (i.e., the solidified mass of a thermoplastic material) to another material (i.e., the inner surfaces of a container);

b) "solidified mass" means that the mass in question is solid at room temperature (e.g., 20°C).

In a second embodiment of the invention, the method of packaging the thermoplastic material includes the steps of:

a) applying a thin layer of an abherent material to the inner surfaces of the container;

b) filling the container with a desired quantity of the molten thermoplastic material so as to leave a void space between the top surface of the molten thermoplastic and the open end of the container;

c) sealing the container, with a cover having a thin layer of the abherent material on its inner surface; and

d) inverting the container.

Inverting the container provides a hermetic seal around the covered end. It also relocates the void space to the other end of the container.

A third embodiment comprises a method of removing a solidified thermoplastic material from the container. This method includes the steps of

a) inserting a device into the container which is capable of heating the thermoplastic material to a molten condition,

b) heating the thermoplastic material until it becomes molten,

c) and removing the molten thermoplastic material from the container.

The present invention overcomes many of the disadvantages of the prior art. For example, it eliminates the need for attaching special pail extenders to the container prior to removal of the thermoplastic material therefrom. It also eliminates the need to employ films or barrier layers over the top of the thermoplastic material to prevent it from contacting the air space, if any, provided in the container.

Detailed Description

The container used in the present invention comprises a body portion which is closed at one end and open at the other end. The body portion and closed end of the container define a cavity for receiving the thermoplastic material. The open end is employed for filling the container after which it may be closed or sealed with a suitable cover.

The container may have a variety of geometric shapes. However, the body portion is generally cylindrical. Preferably, the body portion has smooth sides. Furthermore, while the closed end of the body portion may comprise a crimped end, it preferably comprises a flat, circular portion between the side walls of the container.

The present invention is of particular use in packaging thermoplastic materials in five-gallon or larger containers, although it may also be employed with smaller containers.

The containers used in the invention typically are provided with some type of protective coating on their inner surfaces when purchased. These coatings prevent the material held within the container from contacting and/or corroding the container walls. Such materials are not, however, abherent in the sense of the present invention, since they do not prevent the significant adhesion of the solidified thermoplastic material to the container walls.

A layer of the abherent material is provided on the interior surfaces of the container which define the cavity. A wide variety of materials can be used to provide the abherent coating. They prevent the solidified thermoplastic material from adhering to the sides of the container, but do not materially adversely affect the ultimate functioning of the material which is being packaged in the container.

Materials suitable for use as the abherent layer may come in a variety of forms and include a wide variety of materials. For example, they may be liquids (e.g., solutions, emulsions, etc.) or solids (e.g., waxes, powders, etc.). Regardless of the form in which they are provided, these materials may be applied to the inner surfaces of the container by a variety of techniques including spraying, brushing, wiping, dipping, etc. Combinations of application techniques may be used if desired. For example, the material may be sprayed onto the inner surface of the container after which those surfaces may be wiped with a cloth or sponge to spread the material uniformly across the inner surfaces. The material used for the abherent coating is preferably applied to all of the interior surfaces of the container. However, whatever mechanism of application employed, it is preferred that the final coating be essentially continuous and thin on the interior surfaces.

Illustrative examples of materials useful as the abherent coating include organic materials that may be polymeric or non-polymeric. These materials may include, for example, fluorinated materials, silicon-containing materials, and the like. Furthermore, the non-polymeric materials may be either short- or long-chain materials. Inorganic materials may also be employed as the abherent material.

Specific examples of useful non-polymeric organic materials are long-chain alkyl derivatives such as fatty ester synthetic waxes (e.g., diethylene glycol monostearate, hydrogenated castor oil, and the like); fatty acids (e.g., stearic acid, oleic acid, etc.); fluorinated fatty acids and alcohols (e.g., perfluorolauric acid); fatty acid metal salts (e.g., zinc stearate, calcium stearate, etc.); fatty amides (e.g., ethylenebis(stearamide), oleyl palmitamide, etc.); fatty amines and alcohols; natural products such as petroleum waxes, (e.g., microcrystalline wax, paraffin wax, etc.); vegetable waxes (e.g., carnauba wax, etc.), vegetable oils, mineral oils, animal waxes (e.g., spermaceti wax, etc.); cellulose derivatives (e.g., cellophane, cellulose acetate, etc.); polysaccharides (e.g., sodium alginate, etc.), and flour. Commercially available vegetable oils useful in the invention include those available under the tradenames PAM™ and MAZOLA™ oil. A commercially available petroleum wax useful in the present invention is VASELINE™ Petroleum Jelly (a decolorized synthetic blend of mineral oil and microcrystalline wax or paraffin wax or both available from Cheeseborough-Ponds, Inc., New York, NY).

Specific examples of useful polymeric hydrocarbon materials are polyolefins (e.g., polyethylene, polypropylene, etc.), and poly(vinyl alcohol).

Specific examples of useful fluorinated polymeric materials are fluorocarbons (e.g., polytetrafluoroethylene, poly(fluoroacrylates), poly(fluoroethers), etc.).

Specific examples of useful silicon-containing polymeric and non-polymeric materials include the silicones (e.g., polydimethylsiloxane, polyakl-lylmethylsiloxane, etc.).

Specific examples of useful inorganic materials include silicates (e.g., talc), clays (e.g., kaolin, mica), silica, graphite, etc.

Various adjuvants may be employed along with the abherent material so as to improve its functionality. Such adjuvants include, for example, wetting agents and the like.

In practicing the method of filling the container according to the invention, the abherent coating is first provided on the inner surfaces of the container. The molten thermoplastic material is then charged to the container to a desired level. For example, the container is filled to from 5 to 15 cm from the top, so as to leave a head space for later insertion of the heated platen used to unload the container.

If the thermoplastic material is moisture-sensitive, that is, if it reacts with moisture, the material should be charged to the container in an inert atmosphere. For example, a nitrogen blanket may be used to exclude moisture.

Once the container has been filled to the desired level, and while the nitrogen purge is continued, the cover is placed on the container and sealed thereto. Preferably, the gasket area of the cover is coated with a layer of an abherent material such as a petroleum jelly or similar material, before the cover is sealed to the container. Once the cover is sealed to the container, the package is then preferably immediately inverted which allows the molten liquid material to fill and seal the area around the cover. This also transfers the void space to the normally closed end. The container is then preferably stored in this position until just prior to use. This effectively seals out moisture from the container. The molten thermoplastic material is then allowed to solidify in situ.

Just prior to use, the user reinverts and opens the container. In some cases, the solidified mass of thermoplastic material will settle back to the bottom of the container by itself after being reinverted. In other cases, a gentle push may be used to cause the solidified mass to settle back to the bottom of the container, recreating the head space necessary for use with many platen type unloaders. Alternatively, the heated platen of the unloader may be used to push the solidified mass to the bottom of the container. However the solidified mass is moved to the closed end of the container, it is readily done in the practice of the invention.

The nature of the material used as the abherent coating, the shape of the container, and the amount of shrinkage of the thermoplastic material upon solidification, each play a role in determining the ease with which the solidified material will return to the bottom of the container once the container is reinverted. For example, in the case of a straight-sided container, having no stiffening ring along the side, a solidified thermoplastic material which has a moderate shrinkage (e.g., liquid density of 1.03/solid density of 1.09) will readily return to the bottom on its own when reinverted. If it does not, only light a tap of the pail on the floor, or shove of the mass, is needed to move the slug to the bottom. Pails that are tapered or that have stiffening rings along the side present difficulty in that the solid material formed in the container may not slide totally to the bottom of the re-inverted container. When this type of container is employed, a material having a higher shrinkage may be needed so as to avoid the formation of rings in the solidified mass which would catch along the side of the container and prevent that mass from sliding to the bottom of the pail.

Thermoplastic materials which may be packaged by this technique are known. For example, such materials which are useful as adhesives, coatings and sealants are described in various publications such as U.S. Pat. Nos. 4,218,351; 4,611,051; 4,656,242;

4,585,819; 4,352,858; UK Patent 2,137,638 and EPA 0340906.

**Claims**

1. A container of solid hot melt material comprising:
   (a) a body portion having a first closed end, a second closed end which can be opened and a side wall between said ends, and
   (b) interior surfaces on said ends and said side wall which define a cavity in said body portion,
   characterized in that there is
   (c) an abherent coating on said interior surfaces, and
   (d) a mass of said solid hot melt material in said cavity that is separated from said interior surfaces by said abherent coating
   wherein said mass is at said second closed end and provides a hermetic seal thereto and wherein there is a void space at said first closed end that is of a volume adequate to receive a platen therein.

2. A container according to claim 1 wherein said mass comprises a moisture-curable material.

3. A container according to claim 1 wherein said abherent material comprises a layer of a fluid material.

4. A container according to claim 3 wherein said abherent material comprises a vegetable oil.

5. A container according to claim 1 wherein said mass can be moved between said first and second ends while still solidified.

6. A container according to claim 1 wherein said void space is free from moisture.

7. A method of packaging a thermoplastic material comprising the steps of
   (a) applying a thin layer of an abherent material to the inner surfaces of a container;
   (b) filling said container with a desired quantity of the molten thermoplastic material so as to leave a void space between the top surface of said thermoplastic material and the open end of said container;
   (c) sealing said container with a cover having a thin layer of said abherent coating on the inner surface thereof;
   (d) inverting said container so as to (i) provide a hermetic seal around said sealed end and (ii) relocate said void space to the other end of said container.

8. A method according to claim 7 comprising the further step of
   (b1) removing ambient air from said void space and replacing it with a moisture free environment.

9. A method according to claim 7 wherein said abherent material is applied by spraying.

10. A method according to claim 9 wherein said abherent material is a vegetable oil.

European Patent
Office

**EUROPEAN SEARCH REPORT**

Application Number

EP     92 30 0599

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | US-A-3 031 106 (HOOKER)<br>* the whole document *<br>--- | 1,3,5,7 | B65D65/42<br>B65B63/08 |
| Y | US-A-2 690 255 (KAISER)<br>* column 1, line 27 - column 1, line 34 *<br>* column 2, line 22 - column 2, line 48; claim 1 *<br>--- | 1,3,5,7 | |
| D,A | EP-A-0 330 390 (EMHART)<br>* column 1, line 17 - column 1, line 55; figures 1,2 *<br>--- | 2 | |
| A | US-A-2 666 523 (RYAN)<br>* column 1, line 25 - column 2, line 8 *<br>--- | 4,10 | |
| A | US-A-4 528 799 (OLSEN)<br>* the whole document *<br>--- | 6,8 | |
| A | US-A-2 708 544 (NORMAN)<br>* column 3, line 65 - column 4, line 6 *<br><br>----- | 9 | TECHNICAL FIELDS<br>SEARCHED (Int. Cl.5 )<br><br>B65D<br>B65B<br>B29B |

The present search report has been drawn up for all claims

| Place of search | Date of completion of the search | Examiner |
|---|---|---|
| THE HAGUE | 13 MAY 1992 | NEWELL P.G. |

EPO FORM 1503 03.82 (P0401)